# EUROPEAN PATENT SPECIFICATION

(11) **EP 3 705 226 B1**
(45) Date of publication and mention of the grant of the patent: **17.07.2024**
(21) Application number: 20160194.5
(22) Date of filing: 28.02.2020
(51) Int. Cl.: B23Q 1/03

(54) **WORKING CENTER PROVIDED WITH AN INTERCHANGEABLE WORKING PLANE AND OPERATION METHOD THEREOF**
BEARBEITUNGSZENTRUM MIT AUSWECHSELBARER BEARBEITUNGSEBENE UND VERFAHREN ZUR BEARBEITUNG
CENTRE D'USINAGE AVEC PLAN DE TRAVAIL INTERCHANGEABLE ET METHODE D'USINAGE

(30) Priority: 08.03.2019 IT 201900003417
(43) Date of publication of application: 09.09.2020
(73) Proprietor: SCM Group S.p.A., 47921 Rimini (RN) (IT)
(72) Inventor: BAGGIARINI, Elia, 47921 Rimini (RN) (IT); MAZZA, Michele, 47921 Rimini (RN) (IT); DI NAPOLI, Bruno, 47921 Rimini (RN) (IT); D'AURIA, Marcello, 47921 Rimini (RN) (IT); SPAZZOLI, Andrea, 47921 Rimini (RN) (IT)
(74) Representative: Tiburzi, Andrea

(56) References cited:
- EP-A1- 2 361 738
- WO-A1-03/097296
- DE-A1- 102017 121 983

## Description

This invention relates to a working center for workpieces made of wood, ceramic, plastic, metal, glass, fibreglass and the like, provided with an interchangeable working plane.

The invention also relates to a method for operation of the working center.

More in detail, the invention relates to a working center of the said type, designed and produced in particular to adapt a working plane to various types of machining operations which require the use of working planes with bars and multifunction planes for machining wooden workpieces, but which can be used for any workpiece to be machined, so that different machining operations must be performed in the same working center.

The following description will relate to working center for wooden workpieces, but it is evident that it must not be considered to be limited to that specific use.

As is well known, there are prior art working centers for wooden workpieces equipped with a working plane comprising a base for resting on the ground and a plurality of bars for supporting workpieces to be machined which are usually coupled with said base in a removable or movable fashion.

WO 03/097296 A1 discloses a working center according to the preamble of claim 1.

The supporting plane equipped with bars is used for a type of machining in which it is necessary to have a free space beneath the supporting base of the workpiece, so as to allow the tools of the working center to pass beyond the workpiece during machining.

There are also prior art working centers equipped with a base to which is coupled a multifunction working plane.

The expression "multifunction working plane" means a continuous plane used for non-through machining in a vertical direction, that is to say, at right-angles to the plane, equipped with means for fixing the workpiece, generally a vacuum system delimited in specific areas of the plane by means of gaskets positioned manually by the operator.

For this reason, in order to carry out different machining operations on workpieces, it is necessary to use working centers having the type of working plane most suitable for the machining to be performed on the workpiece.

The relevant prior art includes also the patent applications WO 03/097296 A1 and DE 102017121983 A1.

In light of the above, the aim of the invention is therefore to provide a working center equipped with an interchangeable working plane between a working plane provided with supporting bars and a working plane provided with a multifunction supporting plane.

Another aim of the invention is to equip the working plane of a working center automatically for the different operations to be performed on the workpiece to be machined.

A further aim of the invention is to provide a working center equipped with an interchangeable plane with small dimensions.

Yet another aim of the invention is to provide a working center equipped with a system for changing the working plane which is fast and efficient.

These and other results are obtained according to the invention with a working center as defined in claim 1.

Further according to the invention, said interface means are positioned on two opposite sides of said at least one multifunction plane module and comprise at least one supply channel.

Again according to the invention, said at least one supply channel is a pneumatic supply channel.

Preferably according to the invention, said interface means are positioned on two opposite sides of said at least one multifunction plane module and comprise at least one housing for said pick-up and movement means.

Further according to the invention, said pick-up and movement means comprise a first jaw and a second jaw movable with respect to each other and with respect to said base.

Again according to the invention, each of first and second jaws comprise interface means for coupling with said interface means of said at least one multifunction plane module.

Preferably according to the invention, said interface means of each of said first and second jaw comprise, respectively, a first and a second pin and at least one pneumatic supply channel, said first and second pin inserting in the corresponding housing of said multifunction plane module for picking up the module, and said at least one pneumatic supply channel of each of said first and second jaw interfacing with the corresponding pneumatic supply channel of said at least one multifunction plane module for the pneumatic supply of the multifunction plane module.

Further according to the invention, a sensor is mounted on each of said first and second jaws for the detection of a predetermined reference present on each module of said plurality of multifunction plane modules, for the positioning of each of said first and second pins positioned inside the respective housing.

Again according to the invention, said at least one multifunction plane module is equipped with an upper layer, where the workpiece is housed, and a lower layer, and on said lower layer there being fixed a first and a second supporting structure movable from a rest position to an operating position.

Preferably according to the invention, each of said first and second supporting structures comprises a first and a second foot, which are able to pass from a rest position, in which they are positioned parallel to said lower layer, to an operating position, in which they are positioned at right-angles to said lower layer.

Further according to the invention, each of said first and second feet comprise a gripper which is able to pass from a rest position in which it is open and a closed position, said actuating means controlling the passage of said gripper from said rest position to said closed position and comprising in turn a plate, and they are able to pass from a raised position to a lowered position moving along a direction parallel to the axis Z of the Cartesian reference system, and a spring, and said plate and spring are configured in such a way that said plate is able to compress said spring, causing the passage of said gripper da from said open position to said closed position.

Again according to the invention, said base comprises a first and a second guide, integral with said base, and said gripper of each of said first and second feet can be attached in contact with the respective guide between said first and second guide, in said operating position.

Preferably according to the invention, said base is equipped with an end, and can comprise a plurality of multifunction plane modules positioned in rest mode stacked at said end.

Further according to the invention, said pick-up and movement means are coupled and/or integrated in said working unit and are movable along said base, in a direction parallel to the axis X of the Cartesian reference system, together with said working unit.

Again according to the invention, said pick-up and movement means are movable, in a direction parallel to the axis Z of the Cartesian reference system, away from and towards said base, and said pick-up and movement means comprise a first and a second jaw movable, towards and away from each other, in a direction parallel to the axis Y of the Cartesian reference system.

Preferably according to the invention, a vacuum conduit is fixed on said base, equipped with a vacuum off-take.

Further according to the invention, said first foot comprises a vacuum manifold designed to couple with said vacuum conduit through said vacuum off-take.

Another object of the invention is a method for operating the working center according to the invention, as defined in claim 18.

The invention is now described, by way of example and without limiting the scope of the invention, with reference to the accompanying drawings which illustrate preferred embodiments of it, in which:
Figure 1 shows a perspective side view of the working center for wooden workpieces equipped with an interchangeable working plane according to the invention;
Figure 2 shows a perspective side-rear view of the working center of Figure 1;
Figure 3 shows a perspective side-rear side view of the working center of Figure 1;
Figure 4 shows a detail of the coupling system of two components of the working center according to the invention;
Figure 5 shows a top view of the base of the working center of Figure 1;
Figure 6 shows a detail of a component in which is provided the base of Figure 5;
Figure 7 shows a perspective side view of a component of the working center of Figure 2;
Figure 8 shows s a side view of a multifunction plane module installed on the working center according to the invention;
Figure 9 shows a side view of a detail of the coupling between the gripping system and the multifunction plane module;
Figure 10 shows a further side view of a detail of the coupling between the gripping system and the multifunction plane module;
Figure 11 shows a side perspective view of multifunction plane module;
Figure 12 shows a view from below of the module shown in Figure 11;
Figure 13 shows a front view of the module shown in Figure 11;
Figure 14 shows a perspective view from above of a component of the module shown in Figure 11;
Figure 15 shows a view from below of the component shown in Figure 14;
Figure 16 shows a side perspective cross-section view of a detail of the component shown in Figure 15;
Figure 17 shows a further side perspective cross-section view of the detail shown in Figure 16;
Figure 18 shows a front view of the detail shown in Figure 17, in a first position;
Figure 19 shows a front view of the detail shown in Figure 17, in a second position;
Figure 20 shows a side perspective view of a vacuum conduit of the working center; and
Figure 21 shows a coupling between a module and the vacuum conduit.

The similar parts will be indicated in the various drawings with the same numerical references.

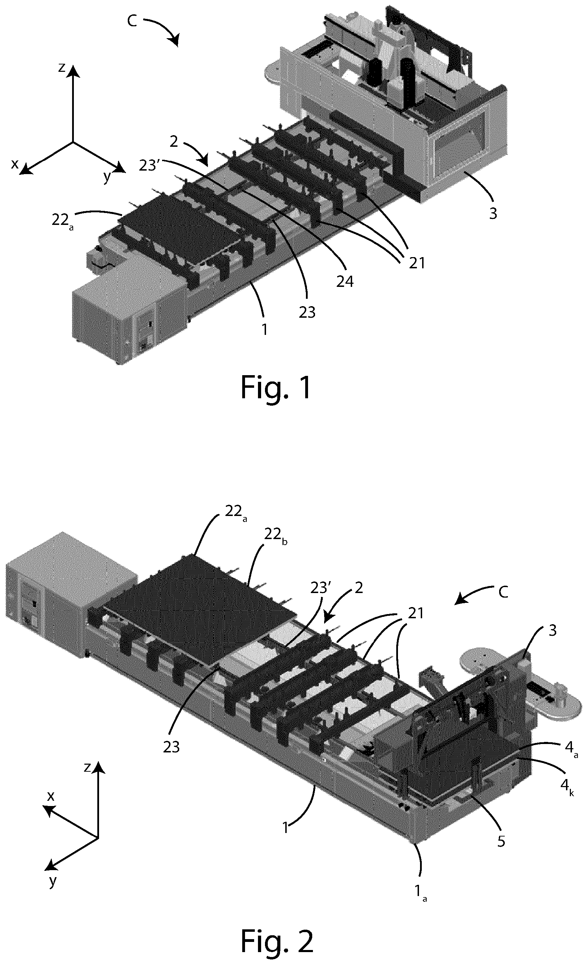

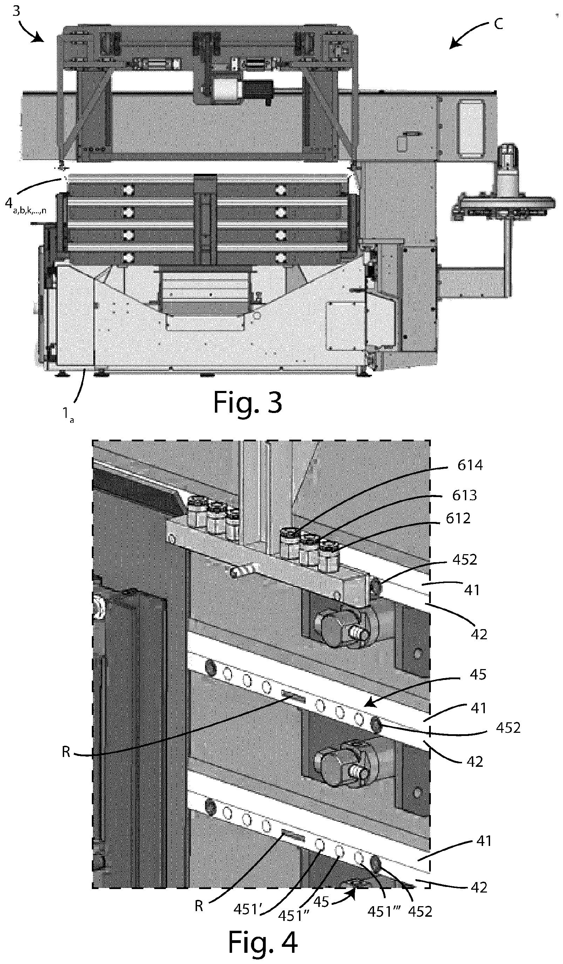

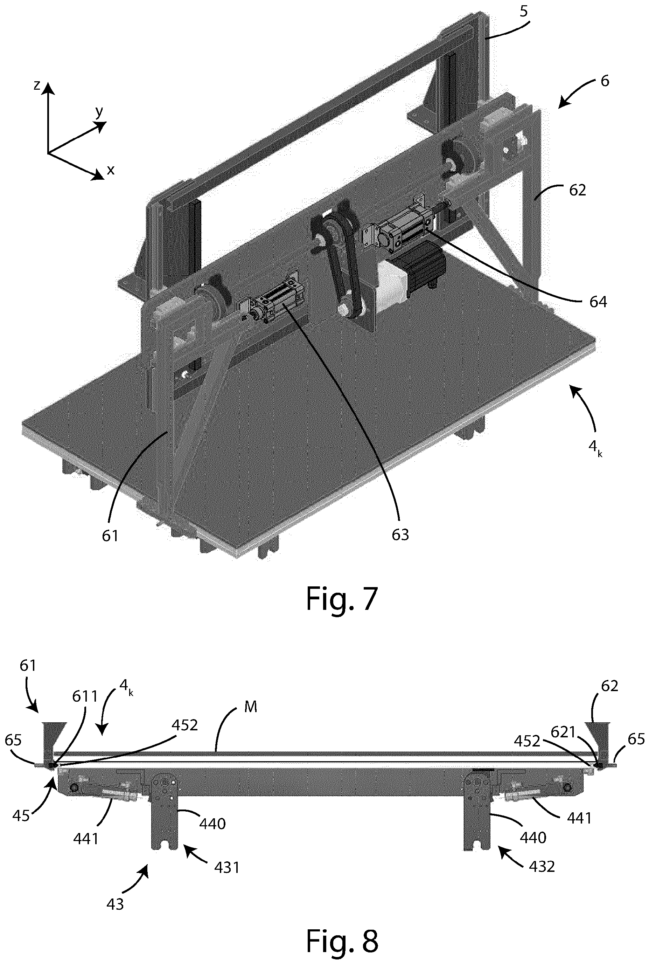

With reference to Figures 1 to 3, the working center C for workpieces made of wood, ceramic, plastic, glass, fibreglass and the like, provided with an interchangeable working plane, according to the invention, basically comprises a base 1, by means of which said working center C rests on the ground, a working plane 2, for supporting workpieces and a working unit 3, equipped with tools for machining workpieces, in which are integrated pick-up and movement means 6, shown in Figure 7.

Said base 1 has an elongate shape, the main dimension of which extends mainly along a direction of extension parallel to the axis indicated with reference X.

Said work surface 2 is coupled to said base 1 and also has an elongate shape, the main dimension of which extends mainly along a direction of extension parallel to the axis X .

Said working plane 2 comprises a plurality of supporting bars 21 which are coupled in a slidable fashion with said base 2 by means of a first 23 and a second 23 guide, integral with said base 1.

Each bar of said plurality of bars 21 is positioned aligned along a direction parallel to an axis at right angles to the axis X, indicated with the reference Y.

Said plurality of supporting bars 21 is designed for supporting and blocking the workpieces by means of vacuum systems, during the machining by said working unit 3.

A modular vacuum conduit 24 is also fixed on said base 1.

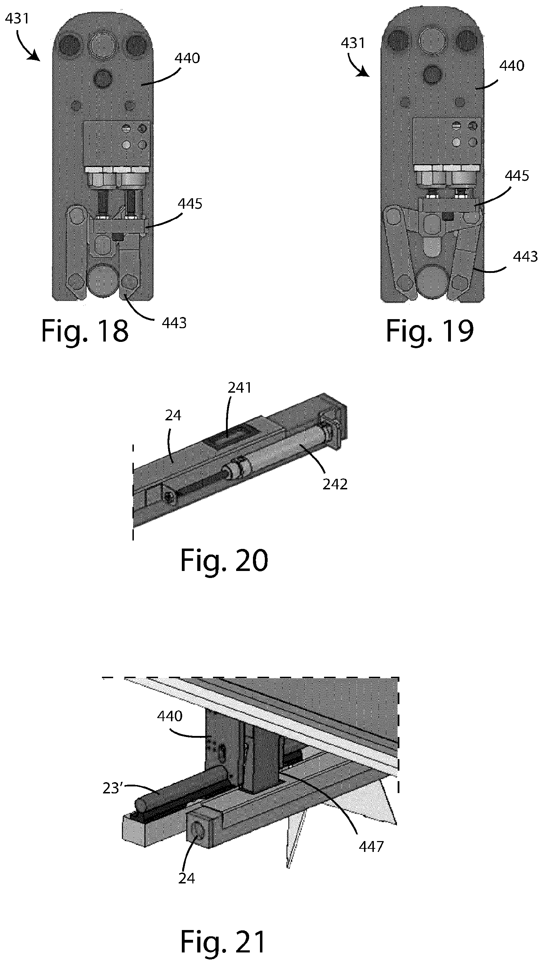

With reference to Figure 20, said vacuum conduit 24 has a vacuum off-take closed by a door 241 movable by means of a pneumatic cylinder 242, so as to avoid the accidental entrance of waste material from the machining.

Said working unit 3 comprises a working head which supports and actuates relative work tools, not shown in the drawings, for machining workpieces resting on said working plane 2, and it is covered by a protective casing.

Said working unit 3 is slidably coupled to said base 1 for translating according to the axis X.

Said working center C is equipped with a plurality of multifunction plane modules 4_{a, b, k,...,n}.

Each module 4ₖ of said plurality of multifunction plane modules 4_{a,b,k,...,n} is used for non-through machining, as described above, to be performed on workpieces and it is positioned above said plurality of supporting bars 21, as described in detail below.

Said plurality of multifunction plane modules 4_{a, b, k,...,n} is positioned at an end 1ₐ of said base 1, in such a way that each module 4ₖ is placed stacked one above the other in a direction parallel to a vertical axis indicated with Z.

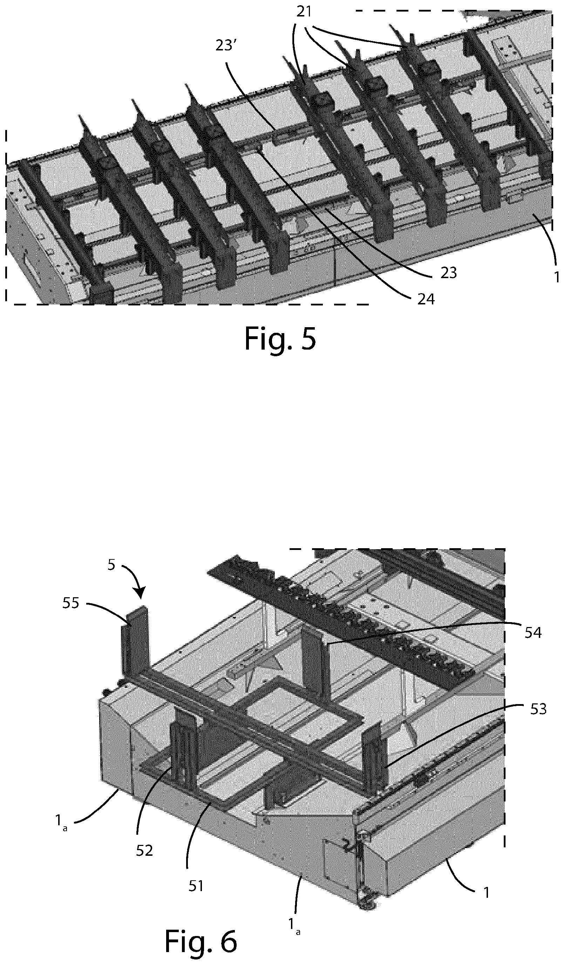

With reference also to Figure 6, at said end 1ₐ of said base 1, is positioned a retaining device 5 so as to keep stacked all the modules of said plurality of multifunction plane modules 4_{a,b, k,...,n}.

In particular, said sealing device 5 comprises a frame 51 integral with said base 1.

Said frame 51 supports a first 52 and a second 53 fixed contact element and a first 54 and a second 55 movable contact element.

Said first 52 and second 53 contact elements act as contacts for each module 4ₖ of said plurality of multifunction plane modules 4_{a, b, k,..., n} and are respectively in contact with a first and a second side of each module 4ₖ, when this is positioned in said retaining device 5.

Said first 54 and second 55 movable contact elements are equipped with springs, so as to adapt to the dimension of each module 4ₖ and exert a thrust force respectively on the remaining third and fourth side of each module 4ₖ, when this is positioned in said retaining device 5.

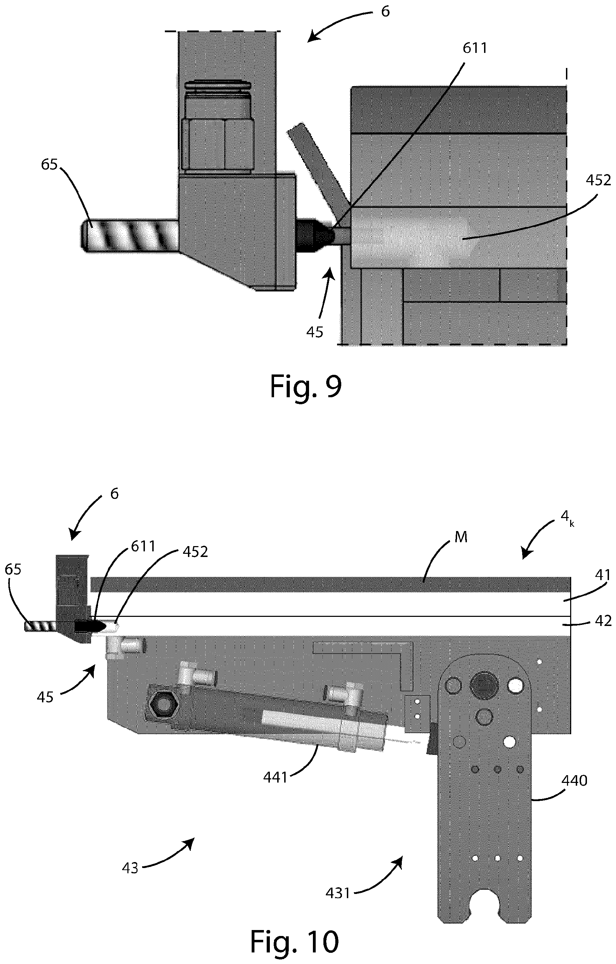

With reference to Figures 8 to 13, each module 4ₖ of said plurality of multifunction plane modules 4_{a, b, k,..., n} is equipped with an upper layer 41 and a lower layer 42.

A first 43 and a second 44 supporting structure are coupled to said lower layer 42.

Moreover, in said lower layer 42 there are interface means 45 with said pick-up and movement means 6, for each of said first 43 and second 44 supporting structure and o the two opposite sides of each module 4ₖ.

Said upper layer 41 is designed for directly supporting the workpiece, or indirectly supporting, by means of a support panel M, on which is rested the workpiece.

Said support panel M is used for the non-through machining during which it undergoes deformations and/or breakages due to the machining operations which are carried out on the underlying workpiece and, therefore, is replaced at the end of the operations.

In particular, said interface means 45 comprise at least one pneumatic supply channel 451 and at least one housing 452 for inserting said pick-up and movement means 6 which supply pneumatic power to said module 4ₖ, as described in detail below.

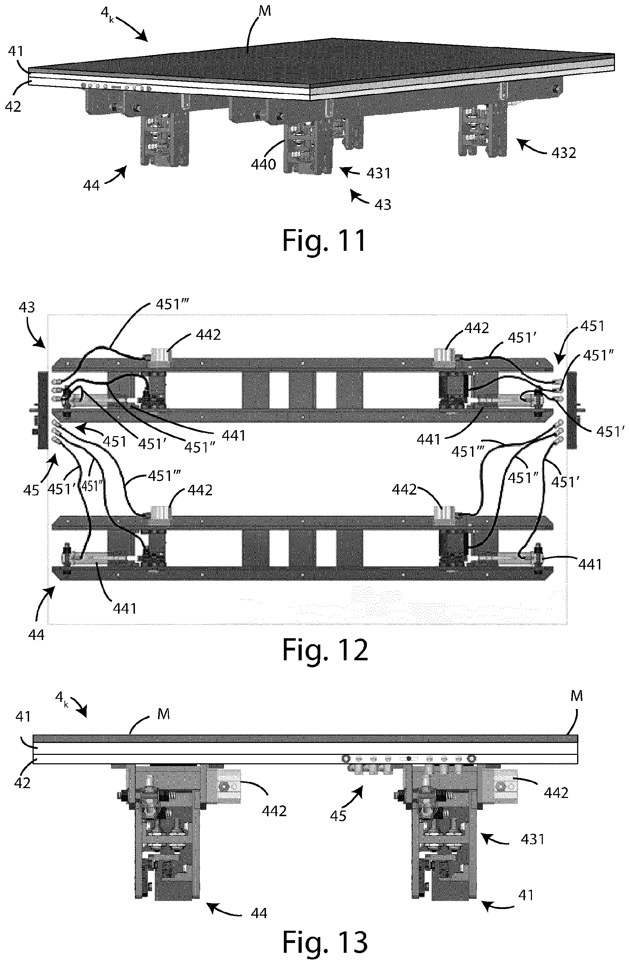

In particular, as shown in Figure 12, in this embodiment described, there are three pneumatic supply channels 451, for the reasons described in detail below, in particular, a first 451', a second 451" and a third 451‴ pneumatic supply channel.

Said first 43 and second 44 supporting structure have the same structure, so, for simplicity of description, only one will be described.

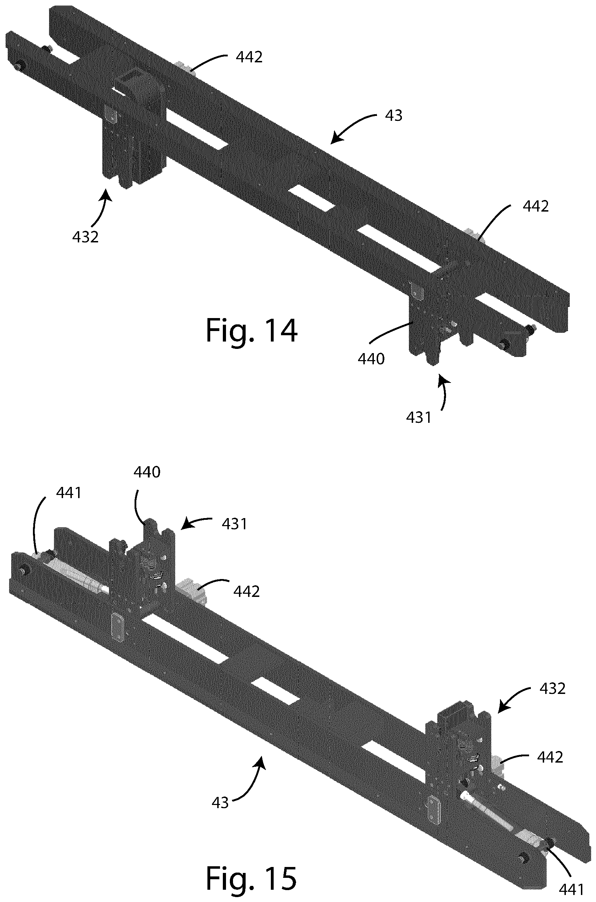

With reference to Figures 14-19, said first supporting structure 43 comprises a first foot 431 and a second foot 432.

Said first 431 and second 432 feet move from a rest position, in which they lie horizontally, aligned in contact with said lower layer 42 of said module 4ₖ, to an operating position in which they are positioned vertically, according to the axis Z, in such a way as to be attached in contact with the respective between said first 23 and second 23' guides of said base 1.

Since the structure of each foot is identical, for simplicity of description only one foot is described.

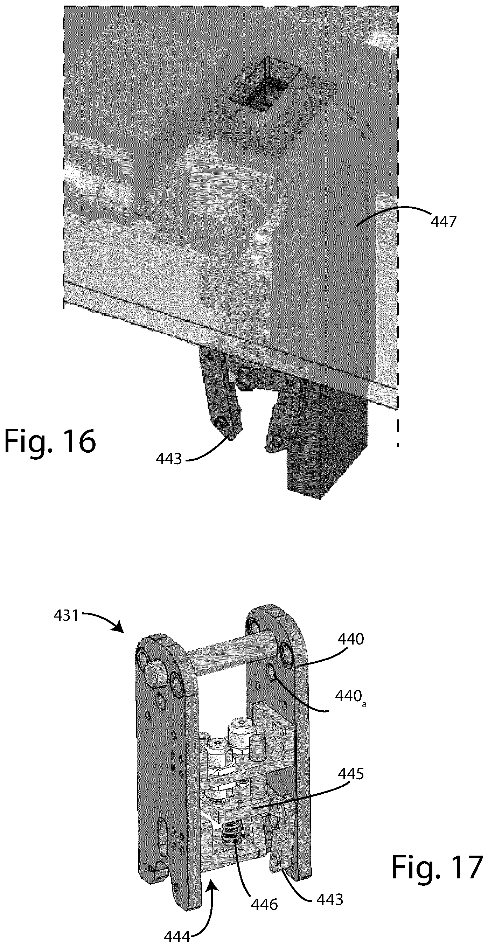

With reference to Figures 17 to 19, said first foot 431 comprises a supporting bracket 440, having a concave shape coupling so as to couple with one of said first 23 or second 23' guide.

A through hole 440ₐ is made on said support bracket 440.

Said first foot 431 is moved by a double-acting pneumatic cylinder 441 which controls the passage from said rest position to said operating position and vice versa, said pneumatic cylinder 441 being supplied by said first pneumatic supply channel 451'.

Said first foot 431 is equipped with a shutter 442 comprising an outer shell and a pin movable pneumatically, passing in said through hole 440ₐ, with spring return, supplied by said third pneumatic supply channel 451‴.

Said shutter 442 has a safety function for each foot 431 of said first 43 and second 44 supporting structure.

In particular, said movable pin is designed to insert in said through hole 440ₐ, for keeping the rest and operating positions of said first foot 431, whilst it is designed to be removed from said through hole 440ₐ in the position changes of said first foot 431.

With particular reference to Figures 16-19, said first foot 431 also comprises a gripper 443 and means 444 for actuating said gripper.

Said actuation means 444 comprise a plate 445 and a spring 446.

Said plate 445 is able to pass from a raised position to a lowered position moving along the axis Z.

Said spring 446 extends in the rest position of said foot 431.

Said gripper 443 is able to pass from a rest position in which it is open, to an operating position in which it is closed.

Said plate 445 is compressed by a pneumatic force coming from said second pneumatic supply channel 451", passing from said raised position to said lowered position in which said spring 446 is compressed, causing the passage of said gripper 443 from said open position to said closed position in which it attaches and clamps one of said first 23 or second 23' guides.

Said first foot 431 also comprises a vacuum manifold 447 designed to couple with said vacuum conduit 24 through the vacuum off-take.

Said working center C also comprises pick-up and movement means 6 or clamps, coupled and/or integrated with said working unit 3, of said plurality of multifunction plane modules 4_{a, b, k,..., n}, designed to pick-up each module 4ₖ of said plurality of multifunction plane modules 4_{a, b, k,..., n} from said end 1ₐ of said base 1 and position it on said base 1, attached to said first 23 and second 23' guides.

Said pick-up and movement means 6 or clamps are movable along the axis Z along a support S by means of a gear motor, away from and towards said base 1, and are movable along the axis Y.

In particular, said clamp 6 comprises a first 61 and a second 62 jaw movable from and towards each other along the axis Y, by means of a first 63 and a second 64 pneumatic cylinder.

Said first 61 and second 62 jaws comprise respectively interface means with said module 4ₖ such as a first 611 and a second 621 pin and a first 612, a second 613 and a third 614 pneumatic supply channel.

Each of said first 611 and second 621 pin inserts in respective housings 452 of each module 4ₖ of said plurality of multifunction plane modules 4_{a, b, k,..., n} by means of a pneumatic actuation.

Each of said first 61 and second 62 jaw also comprise a first 612, a second 613 and a third 614 pneumatic supply channel which interface with the respective first 451', second 451" and third 451‴ pneumatic supply channels of each module 4ₖ for supplying the pneumatic power.

On each of said first 61 and second 62 jaw is mounted a sensor 65 for detecting a predetermined reference R present on each module 4ₖ of said plurality of multifunction plane modules 4_{a, b, k,..., n}, so as to allow the correct positioning of each of said first 611 and second 621 pin inside the respective housing 452.

The operation of the working center C described above is as follows.

When it is necessary to carry out a machining operation on a workpiece which requires that the working plane 2 comprises said plurality of multifunction plane modules 4_{a, b, k,..., n}, it is necessary to position said plurality of multifunction plane modules 4_{a, b, k,..., n}, completely or partly on said working plane 2.

In particular, said pick-up and movement means 6 translate according to the axis X along said base 1 for picking up each module 4ₖ of said plurality of multifunction plane modules 4_{a, b, k,..., n} from said end 1ₐ and positioning it above said plurality of supporting bars 21, one at a time, until reaching the length of multifunction plane necessary for performing the machining, in such a way that all or part of the modules of said plurality of multifunction plane modules 4_{a, b, k,..., n} are coplanar fir forming a single working plane.

When all the modules of said plurality of multifunction plane modules 4_{a, b, k,..., n} are positioned stacked in said retaining device 5, said first 431 and second 432 of each of said first 43 and second 44 supporting structure are in said rest position.

In order to move each module of said plurality of multifunction plane modules 4_{a, b, k,..., n}, said clamp 6 moves along said base 1 towards the end 1ₐ, integral with said working unit 3.

Subsequently, said clamp 6 translates along the axis Z towards said base 1, until said sensor 65 detects said reference R present on the multifunction plane module 4ₖ which must be picked up.

Subsequently, each of said first 61 and second 62 jaws translate along the axis Y towards each other, so that the respective first 611 and second 621 pin insert in the respective housings 452 and the respective first 612, second 613 and third 614 pneumatic supply channels interface with the corresponding first 451', second 451" and third 451‴ pneumatic supply channels of the module 4ₖ to be picked up.

Simultaneously, the pneumatic circuits of the working center C are activated and the pneumatic thrust force passes from said clamp 6 towards said module 4ₖ through the respective pneumatic supply channels described above.

For this reason, said first 431 and second 432 foot of said first 43 and second 44 supporting structure pass from said rest position to said operating position by the activation of said pneumatic cylinders 441.

Both in the stacked position of the modules 4ₖ and during their transport step, said gripper 443 is in the closed position.

When said clamp 6 reaches the X reference position in which the module 4ₖ must be positioned, for each foot 431, said plate 445 is compressed by a pneumatic force coming from said second pneumatic supply channel 451", passing from said raised position to said lowered position in which said spring 446 is compressed which causes the passage of said gripper 443 from said closed position to said open position.

Said jaw 443 is therefore positioned on one of said first 23 or second 23' guides, and it is then moved again to the closed position to clamp one of said first 23 or second 23' guides.

Simultaneously, said vacuum manifold 447 engages on said vacuum conduit 24 through the vacuum off-take.

Upon completion of positioning of the modules 4ₖ of said plurality of multifunction plane modules 4_{a, b, k,..., n} said clamp 6 releases the last module 4ₖ and the workpiece is machined.

As is apparent from the above description, said working center allows the working plane to be quickly equipped with multifunction plane modules according to the various machining operations to be performed on a workpiece.

Moreover, an advantage of the invention is that of minimising the intervention of an operator during the assembling and disassembling of the multifunction plane modules from the working plane.

## Claims

1. Working center (C), for workpieces to be worked made in wood, ceramic, plastic, metal, glass, fiberglass and the like, comprising:
a base (1) for standing on the ground;
a working plane (2) coupled to said base (1) comprising a plurality of supporting bars (21), for supporting said workpieces;
a working unit (3) movable along said base (1);
said working center (C) being **characterized in that** it comprises:
taking and moving means (6) movable along said base (1);
at least one multifunction plane module (4_{a, b, k,} ..., ₙ) comprising interface means (45) for coupling with said taking and moving means (6), so that said at least one multifunction plane module (4_{a, b, k,} ..., ₙ) moves from a rest position to a working position, in which it is arranged above said plurality of supporting bars (21), to form a continuous multifunction plane.

2. Working center (C) according to the preceding claim, **characterized in that** said interface means (45) are arranged on two opposite sides of said at least one multifunction plane module (4_{a, b, k,} ..., ₙ) and they comprise at least one supply channel (451).

3. Working center (C) according to the preceding claim, **characterized in that** said at least one supply channel (451) is a pneumatic adduction supply channel.

4. Working center (C) according to any one of the preceding claims, **characterized in that** said interface means (45) are arranged on two opposite sides of said at least one multifunction plane module (4_{a, b, k,} ..., ₙ) and they comprise at least one housing (452) for said taking and moving means (6).

5. Working center (C) according to any one of the preceding claims, **characterized in that** said taking and moving means (6) comprise a first jaw (61) and a second jaw (62) movable each other and with respect to said base (1).

6. Working center (C) according to the preceding claim, **characterized in that** each of said first (61) and second (62) jaw comprises interface means (611-612613-614,621) for the coupling with said interface means (45) of said at least one multifunction plane module (4_{a, b, k, ..., n}).

7. Working center (C) according to the preceding claim, when depending on claims 3 or 4, **characterized**
**in that** said interface means of each of said first (61) and second (62) jaw respectively comprise a first (611) and a second (621) pin and at least one pneumatic adduction supply channel (612-613-614),
**in that** the said first (611) and second (621) pin are inserted in the corresponding housing (452) of said at least one multifunction plane module (4_{a, b, k, ..., n}) for taking the module itself, and
**in that** said at least one pneumatic adduction supply channel (612-613-614) of each of said first (61) and second (62) jaw interfaces with the corresponding pneumatic adduction supply channel (451) of said at least one multifunction plane module (4_{a, b, k, ..., n}) for the pneumatic supply of the multifunction plane module (4_{a, b, k, ..., n}) itself.

8. Working center (C) according to the preceding claim, **characterized in that** on each of said first (61) and second (62) jaw a sensor (65) is mounted for detecting a predefined reference (R) present on each module (4k) of said plurality of multifunction plane modules (4_{a, b, k, ..., n}), for positioning each of said first (611) and second (621) pin inside the respective housing (452).

9. Working center (C) according to any one of the preceding claims, **characterized**
**in that** said at least one multifunction plane module (4_{a, b, k,} ..., ₙ) is provided with an upper layer (41), where the workpiece to be worked is housed, and a lower layer (42), and
**in that** on said lower layer (42) a first (43) and a second (44) bearing structure are fixed which are movable from a rest position to a working position.

10. Working center (C) according to the preceding claim, **characterized in that** each of said first (43) and second (44) supporting structure comprises a first (431) and a second (432) foot, capable to move from a rest position, in which they are arranged parallel with respect to said lower layer (42), to a working position, in which they are arranged orthogonal with respect to said lower layer (42).

11. Working center (C) according to the preceding claim, **characterized**
**in that** each of said first (431) and second (432) foot comprises a gripper (443) capable to pass from a rest position in which it is open to a closed position,
**in that** actuating means (444) control the passage of said gripper (443) from said rest position to said closed position and they comprise in their turn a plate (445), capable of passing from a raised position to a lowered position moving along a direction parallel to the axis Z of the Cartesian reference system, and a spring (446), and
**in that** said plate (445) and spring (446) are configured so that said plate (445) is capable to compress said spring (446), causing the passage of said gripper (443) from said open position to said closed position.

12. Working center (C) according to the preceding claim, **characterized**
**in that** said base (1) comprises a first (23) and a second (23') slide, integral with said base (1), and
**in that** said gripper (443) of each of said first (431) and second (432) foot is hooked in contact with the respective slide between said first (23) and second (23') slide, in said working position.

13. Working center (C) according to any one of the preceding claims, **characterized**
**in that** said base (1) is provided with one end (1a), and
**in that** it comprises a plurality of multifunction plane module (4_{a, b, k, ..., n}) arranged at rest stacked in correspondence of said end (1ₐ).

14. Working center (C) according to any one of the preceding claims, **characterized in that** said taking and moving means (6) are coupled and/or are integrated in said working unit (3) and they are movable along said base (1), according to a direction parallel to the X axis of the Cartesian reference system, together with said working unit (3).

15. Working center (C) according to any one of the preceding claims, **characterized**
**in that** said taking and moving means (6) are movable, along a direction parallel to the axis Z of the Cartesian reference system, moving away from and approaching said base (1), and
**in that** the said taking and moving means (6) comprise a first (61) and a second (62) movable jaw, approaching and moving away from each other, along a direction parallel to the axis Y of the Cartesian reference system.

16. Working center (C) according to any one of the preceding claims, **characterized in that** on said base (1) a vacuum pipe (24) is fixed, provided with a vacuum outlet.

17. Working center (C) according to the preceding claim, when depending on claims 10 - 15, **characterized in that** said first foot (431) comprises a vacuum collector (447) capable to couple with said vacuum pipe (24) by means of said vacuum outlet.

18. Operation method of a working center (C) according to any one of the proceeding claims, wherein the working center (C) comprises a plurality of multifunction plane modules (4_{a, b, k, ..., n}) provided with supporting means (431, 432) for positioning said plurality of multifunction plane modules (4_{a, b, k, ..., n}) on said working plane (2), and wherein the taking and moving means (6) of the working center (C) are capable of picking up each module (4ₖ) of said plurality of multifunction plane modules (4_{a, b, k,} ..., ₙ) and supplying a pneumatic supply to each module (4k) of said plurality of multifunction plane modules (4_{a, b, k,} ..., ₙ) for activating said supporting means (431, 432);
said method comprising:
activating interface means (45) of said taking and moving means (6) for taking and positioning each module (4ₖ) of said plurality of multifunction plane modules (4_{a, b, k,} ..., ₙ) on said working plane (2), one at a time, until reaching the length of the multifunction plane necessary to carry out the working on said workpieces.

## Patentansprüche

1. Bearbeitungszentrum (C) für zu bearbeitende Werkstücke aus Holz, Keramik, Kunststoff, Metall, Glas, Glasfaser und dergleichen, umfassend:
eine Basis (1) zum Aufstellen auf dem Boden;
eine Bearbeitungsebene (2), die mit der Basis (1) verbunden ist und eine Vielzahl von Stützstangen (21) zum Stützen der Werkstücke umfasst;
eine Bearbeitungseinheit (3), die entlang der Basis (1) beweglich ist;
wobei das Bearbeitungszentrum (C) **dadurch gekennzeichnet ist, dass** es Folgendes umfasst:
Aufnahme- und Bewegungsmittel (6), die entlang der Basis (1) beweglich sind; mindestens ein Multifunktionsebenenmodul (4_{a,b,k,...,n}), das Schnittstellenmittel (45) zur Kopplung mit den Aufnahmeund Bewegungsmitteln (6) umfasst, so dass sich das mindestens eine Multifunktionsebenenmodul (4_{a, b, k, ..., n}) aus einer Ruheposition in eine Bearbeitungsposition bewegt, in der es über der Vielzahl von Stützstangen (21) angeordnet ist, um eine kontinuierliche Multifunktionsebene zu bilden.

2. Bearbeitungszentrum (C) nach dem vorhergehenden Anspruch, **dadurch gekennzeichnet, dass** die Schnittstellenmittel (45) auf zwei gegenüberliegenden Seiten des mindestens einen Multifunktionsebenenmoduls (4_{a, b, k, ..., n}) angeordnet sind und sie mindestens einen Versorgungskanal (451) umfassen.

3. Bearbeitungszentrum (C) nach dem vorhergehenden Anspruch, **dadurch gekennzeichnet, dass** der mindestens eine Versorgungskanal (451) ein pneumatischer Adduktionsversorgungskanal ist.

4. Bearbeitungszentrum (C) nach einem der vorhergehenden Ansprüche, **dadurch gekennzeichnet, dass** die Schnittstellenmittel (45) auf zwei gegenüberliegenden Seiten des mindestens einen Multifunktionsebenenmoduls (4_{a, b, k, ..., n}) angeordnet sind und sie mindestens ein Gehäuse (452) für die Aufnahmeund Bewegungsmittel (6) umfassen.

5. Bearbeitungszentrum (C) nach einem der vorhergehenden Ansprüche, **dadurch gekennzeichnet, dass** die Aufnahmeund Bewegungsmittel (6) eine erste Backe (61) und eine zweite Backe (62) umfassen, die zueinander und in Bezug auf die Basis (1) beweglich sind.

6. Bearbeitungszentrum (C) nach dem vorhergehenden Anspruch, **dadurch gekennzeichnet, dass** sowohl die erste (61) als auch die zweite (62) Backe Schnittstellenmittel (611-612613-614,621) für die Kopplung mit den Schnittstellenmitteln (45) des mindestens einen Multifunktionsebenenmoduls (4_{a, b, k, ..., n}) umfasst.

7. Bearbeitungszentrum (C) nach dem vorhergehenden Anspruch, wenn es von den Ansprüchen 3 oder 4 abhängt, **dadurch gekennzeichnet dass** die Schnittstellenmittel der ersten (61) und der zweiten (62) Backe jeweils einen ersten (611) und einen zweiten (621) Stift und mindestens einen pneumatischen Adduktionsversorgungskanal (612-613-614) umfassen, dass der erste (611) und der zweite (621) Stift in das entsprechende Gehäuse (452) des mindestens einen Multifunktionsebenenmoduls (4_{a, b, k, ..., n}) eingesetzt sind, um das Modul selbst aufzunehmen, und dass der mindestens eine pneumatische Adduktionsversorgungskanal (612-613-614) jeder der ersten (61) und zweiten (62) Backe mit dem entsprechenden pneumatischen Adduktionsversorgungskanal (451) des mindestens einen Multifunktionsebenenmoduls (4_{a,b,k,...,n}) für die pneumatische Versorgung des Multifunktionsebenenmoduls (4_{a,b,k, ...,n}) selbst verbunden ist.

8. Bearbeitungszentrum (C) nach dem vorhergehenden Anspruch, **dadurch gekennzeichnet, dass** an jeder der ersten (61) und zweiten (62) Backe ein Sensor (65) angebracht ist, um eine vordefinierte Referenz (R) zu erfassen, die an jedem Modul (4k) der Vielzahl von Multifunktionsebenenmodulen (4_{a, b, k, ..., n}) vorhanden ist, um jeden der ersten (611) und zweiten (621) Stifte innerhalb des jeweiligen Gehäuses (452) zu positionieren.

9. Bearbeitungszentrum (C) nach einem der vorhergehenden Ansprüche, **dadurch gekennzeichnet, dass** das mindestens eine Multifunktionsebenenmodul (4_{a, b, k, ..., n}) mit einer oberen Schicht (41), in der das zu bearbeitendes Werkstück untergebracht ist, und einer unteren Schicht (42) versehen ist, und dass auf der unteren Schicht (42) eine erste (43) und eine zweite (44) Lagerstruktur befestigt sind, die aus einer Ruheposition in eine Bearbeitungsposition bewegbar sind.

10. Bearbeitungszentrum (C) nach dem vorhergehenden Anspruch, **dadurch gekennzeichnet, dass** die erste (43) und die zweite (44) Stützstruktur jeweils einen ersten (431) und einen zweiten (432) Fuß aufweisen, die sich aus einer Ruheposition, in der sie parallel zu der unteren Schicht (42) angeordnet sind, in eine Bearbeitungsposition bewegen können, in der sie orthogonal zu der unteren Schicht (42) angeordnet sind.

11. Bearbeitungszentrum (C) nach dem vorhergehenden Anspruch, **dadurch gekennzeichnet dass** der erste (431) und der zweite (432) Fuß jeweils einen Greifer (443) aufweisen, der von einer Ruheposition, in der er geöffnet ist, in eine geschlossene Position übergehen kann, dass Betätigungsmittel (444) den Übergang des Greifers (443) von der Ruheposition in die geschlossene Position steuern und ihrerseits eine Platte (445), die von einer angehobenen Position in eine abgesenkte Position übergehen kann, die sich in einer Richtung parallel zur Achse Z des kartesischen Bezugssystems bewegt, und eine Feder (446) umfassen, und dass die Platte (445) und die Feder (446) so konfiguriert sind, dass die Platte (445) in der Lage ist, die Feder (446) zusammenzudrücken, wodurch der Übergang des Greifers (443) von der offenen Position in die geschlossene Position bewirkt wird.

12. Bearbeitungszentrum (C) nach dem vorhergehenden Anspruch, **dadurch gekennzeichnet, dass** die Basis (1) einen ersten (23) und einen zweiten (23') Schieber umfasst, die mit der Basis (1) verbunden sind, und dass der Greifer (443) des ersten (431) und des zweiten (432) Fußes in der Bearbeitungsposition in Kontakt mit dem jeweiligen Schieber zwischen dem ersten (23) und dem zweiten (23') Schieber eingehakt ist.

13. Bearbeitungszentrum (C) nach einem der vorhergehenden Ansprüche, **dadurch gekennzeichnet, dass** die Basis (1) mit einem Ende (1a) versehen ist, und dass sie eine Vielzahl von Multifunktionsebenenmodulen (4_{a, b, k, ..., n}) umfasst, die in der Ruhestellung entsprechend dem Ende (1ₐ) gestapelt sind.

14. Bearbeitungszentrum (C) nach einem der vorhergehenden Ansprüche, **dadurch gekennzeichnet, dass** die Aufnahme- und Bewegungsmittel (6) mit der Bearbeitungseinheit (3) gekoppelt und/oder in diese integriert sind und zusammen mit der Bearbeitungseinheit (3) entlang der Basis (1) in einer Richtung parallel zur X-Achse des kartesischen Bezugssystems beweglich sind.

15. Bearbeitungszentrum (C) nach einem der vorhergehenden Ansprüche, **dadurch gekennzeichnet dass** die Aufnahme- und Bewegungsmittel (6) in einer Richtung parallel zur Achse Z des kartesischen Bezugssystems beweglich sind und sich von der Basis (1) entfernen und ihr nähern, und dass die Aufnahme- und Bewegungsmittel (6) eine erste (61) und eine zweite (62) bewegliche Klemmbacke umfassen, die sich in einer Richtung parallel zur Achse Y des kartesischen Bezugssystems einander nähern und voneinander wegbewegen.

16. Bearbeitungszentrum (C) nach einem der vorhergehenden Ansprüche, **dadurch gekennzeichnet, dass** an der Basis (1) ein Vakuumrohr (24) befestigt ist, das mit einem Vakuumauslass versehen ist.

17. Bearbeitungszentrum (C) nach dem vorhergehenden Anspruch, wenn dieser von den Ansprüchen 10 bis 15 abhängt, **dadurch gekennzeichnet, dass** der erste Fuß (431) einen Vakuumsammler (447) umfasst, der in der Lage ist, sich mit dem Vakuumrohr (24) mittels des Vakuumauslasses zu verbinden.

18. Verfahren zum Betrieb eines Bearbeitungszentrums (C) nach einem der vorhergehenden Ansprüche, wobei das Bearbeitungszentrum (C) eine Vielzahl von Multifunktionsebenenmodulen (4_{a, b, k, ..., n}) umfasst,
die mit Stützmitteln (431, 432) zum Positionieren der Vielzahl von Multifunktionsebenenmodulen (4_{a, b, k}, _{..., n}) auf der Bearbeitungsebene (2), und wobei die Aufnahmeund Bewegungsmittel (6) des Bearbeitungszentrums (C) in der Lage sind, jedes Modul (4ₖ) der Vielzahl von Multifunktionsebenenmodulen (4_{a, b, k, ..., n}) aufzunehmen und eine pneumatische Versorgung zu jedem Modul (4k) der Vielzahl von Multifunktionsebenenmodulen (4_{a, b, k, ..., n}) zu liefern, um die Stützmittel (431, 432) zu aktivieren; wobei das Verfahren umfasst:
aktivieren von Schnittstellenmitteln (45) der Aufnahmeund Bewegungsmittel (6) zum Aufnehmen und Positionieren jedes Moduls (4ₖ) der Vielzahl von Multifunktionsebenenmodulen (4_{a,b,k,...,n}) auf der Bearbeitungsebene (2), eines nach dem anderen, bis zum Erreichen der Länge der Multifunktionsebene, die notwendig ist, um die Bearbeitung der Werkstücke auszuführen.

## Revendications

1. Centre de travail (C), pour pièces à travailler en bois, céramique, plastique, métal, verre, fibre de verre et similaires, comprenant:
une base (1) destinée à être posée sur le sol;
un plan de travail (2) couplé à ladite base (1) comprenant une pluralité de barres de support (21), pour supporter lesdites pièces à travailler;
une unité de travail (3) mobile le long de ladite base (1);
ledit centre de travail (C) est **caractérisé en ce qu'**il comprend :
des moyens de prise et de déplacement (6) mobiles le long de ladite base (1); au moins un module de plan multifonction (4_{a,b,k,...,n}) comprenant des moyens d'interface (45) pour l'accouplement avec lesdits moyens de prise et de déplacement (6), de sorte que ledit au moins un module de plan multifonction (4_{a, b, k, ..., n}) passe d'une position de repos à une position de travail, dans laquelle il est disposé au-dessus de ladite pluralité de barres de support (21), pour former un plan multifonction continu.

2. Centre de travail (C) selon la revendication précédente, **caractérisé en ce que** lesdits moyens d'interface (45) sont disposés sur deux côtés opposés dudit au moins un module de plan multifonction (4_{a, b, k, ....,n}) et comprennent au moins un canal d'alimentation (451).

3. Centre de travail (C) selon la revendication précédente, **caractérisé en ce que** ledit au moins un canal d'alimentation (451) est un canal d'alimentation d'adduction pneumatique.

4. Centre de travail (C) selon l'une quelconque des revendications précédentes, **caractérisé en ce que** lesdits moyens d'interface (45) sont disposés sur deux côtés opposés dudit au moins un module plan multifonction (4_{a, b, k, ..., n}) et comprennent au moins un logement (452) pour lesdits moyens de prise et de déplacement (6).

5. Centre de travail (C) selon l'une quelconque des revendications précédentes, **caractérisé en ce que** lesdits moyens de prise et de déplacement (6) comprennent une première mâchoire (61) et une seconde mâchoire (62) mobiles entre elles et par rapport à ladite base (1).

6. Centre de travail (C) selon la revendication précédente, **caractérisé en ce que** chacune desdites première (61) et seconde (62) mâchoires comprend des moyens d'interface (611-612613-614,621) pour le couplage avec lesdits moyens d'interface (45) dudit au moins un module plan multifonction (4_{a, b, k, ..., n}).

7. Centre de travail (C) selon la revendication précédente, lorsqu'il dépend des revendications 3 ou 4, **caractérisé en ce que** lesdits moyens d'interface de chacune desdites première (61) et seconde (62) mâchoires comportent respectivement un premier (611) et un second (621) pion et au moins un canal d'alimentation en adduction pneumatique (612-613-614), **en ce que** lesdites première (611) et seconde (621) goupilles sont insérées dans le logement correspondant (452) dudit au moins un module plan multifonction (4_{a, b, k, ..., n}) pour la prise en charge du module lui-même, et **en ce que** ledit au moins un canal d'alimentation en adduction pneumatique (612-613-614) de chacune desdites première (61) et seconde (62) mâchoires s'interface avec le canal d'alimentation en adduction pneumatique correspondant (451) dudit au moins un module de plan multifonctions (4_{a, b, k, ..., n}) pour l'alimentation pneumatique du module de plan multifonctions (4_{a, b, k, ..., n}) lui-même.

8. Centre de travail (C) selon la revendication précédente, **caractérisé en ce que** sur chacune de ladite première (61) et seconde (62) mâchoire est monté un capteur (65) pour détecter une référence prédéfinie (R) présente sur chaque module (4k) de ladite pluralité de modules de plan multifonction (4_{a, b, k, ..., n}), pour positionner chacune de ladite première (611) et seconde (621) broche à l'intérieur du boîtier respectif (452).

9. Centre de travail (C) selon l'une quelconque des revendications précédentes, **caractérisé en ce que** ledit au moins un module plan multifonction (4_{a, b, k, ..., n}) est pourvu d'une couche supérieure (41), où est logée la pièce à travailler, et d'une couche inférieure (42), et **en ce que** sur ladite couche inférieure (42) sont fixées une première (43) et une seconde (44) structure portante qui sont mobiles d'une position de repos à une position de travail.

10. Centre de travail (C) selon la revendication précédente, **caractérisé en ce que** chacune de ces première (43) et deuxième (44) structure de support comprend un premier (431) et un deuxième (432) pied, capables de passer d'une position de repos, dans laquelle ils sont disposés parallèlement par rapport à ladite couche inférieure (42), à une position de travail, dans laquelle ils sont disposés orthogonalement par rapport à ladite couche inférieure (42).

11. Centre de travail (C) selon la revendication précédente, **caractérisé**
**en ce que** chacun desdits premier (431) et deuxième (432) pieds comporte une pince (443) capable de passer d'une position de repos dans laquelle elle est ouverte à une position fermée, en ce que les moyens d'actionnement (444) commandent le passage de ladite pince (443) de ladite position de repos à ladite position fermée et comprennent à leur tour une plaque (445), capable de passer d'une position haute à une position basse en se déplaçant selon une direction parallèle à l'axe Z du système de référence cartésien, et un ressort (446), et en ce que ladite plaque (445) et ledit ressort (446) sont configurés de telle sorte que ladite plaque (445) est apte à comprimer ledit ressort (446), provoquant le passage de ladite pince (443) de ladite position ouverte à ladite position fermée.

12. Centre de travail (C) selon la revendication précédente, **caractérisé**
**en ce que** ladite base (1) comporte un premier (23) et un second (23') coulisseaux, solidaires de ladite base (1), et en ce que ladite pince (443) de chacun desdits premier (431) et second (432) pieds est accrochée en contact avec la glissière respective entre ladite première (23) et seconde (23') glissière, dans ladite position de travail.

13. Centre de travail (C) selon l'une quelconque des revendications précédentes, **caractérisé**
**en ce que** ladite base (1) est pourvue d'une extrémité (1a), et en ce qu'elle comporte une pluralité de modules plans multifonctions (4_{a, b, k, ..., n}) disposés au repos et empilés en correspondance de ladite extrémité (1ₐ).

14. Centre de travail (C) selon l'une quelconque des revendications précédentes, **caractérisé en ce que** lesdits moyens de prise et de déplacement (6) sont couplés et/ou sont intégrés dans ladite unité de travail (3) et ils sont mobiles le long de ladite base (1), selon une direction parallèle à l'axe X du système de référence cartésien, avec ladite unité de travail (3).

15. Centre de travail (C) selon l'une quelconque des revendications précédentes, **caractérisé en ce que** lesdits moyens de prise et de déplacement (6) sont mobiles, selon une direction parallèle à l'axe Z du système de référence cartésien, en s'éloignant et en se rapprochant de ladite base (1), et
**en ce que** lesdits moyens de prise et de déplacement (6) comportent une première (61) et une seconde (62) mâchoires mobiles, se rapprochant et s'éloignant l'une de l'autre, suivant une direction parallèle à l'axe Y du système de référence cartésien.

16. Centre de travail (C) selon l'une quelconque des revendications précédentes, **caractérisé en ce que** sur ladite base (1) est fixé un tuyau de vide (24) muni d'une sortie de vide.

17. Centre de travail (C) selon la revendication précédente, lorsqu'il dépend des revendications 10 - 15, **caractérisé en ce que** ledit premier pied (431) comprend un collecteur de vide (447) capable de s'accoupler avec ledit tuyau de vide (24) au moyen de ladite sortie de vide.

18. Procédé de fonctionnement d'un centre de travail (C) selon l'une quelconque des revendications précédentes, dans lequel le centre de travail (C) comprend une pluralité de modules plans multifonctions (4_{a, b, k, ..., n}) pourvus de moyens de support (431, 432) pour positionner ladite pluralité de modules plans multifonction (4_{a, b, k, ..., n}) sur ledit plan de travail (2), et dans lequel les moyens de prise et de déplacement (6) du centre de travail (C) sont capables de prendre chaque module (4ₖ) de ladite pluralité de modules de plans multifonctions (4_{a, b, k, ..., n}) et de fournir une alimentation pneumatique à chaque module (4k) de ladite pluralité de modules de plans multifonctions (4_{a, b, k, ..., n}) pour activer lesdits moyens de support (431, 432); ladite méthode comprenant:
l'activation des moyens d'interface (45) desdits moyens de prise et de déplacement (6) pour prendre et positionner chaque module (4ₖ) de ladite pluralité de modules de plans multifonctions (4_{a, b, k, .... n}) sur ledit plan de travail (2), un à la fois, jusqu'à atteindre la longueur du plan multifonctions nécessaire pour effectuer le travail sur lesdites pièces à usiner.
